Europäisches Patentamt

European Patent Office

Office européen des brevets

(11) Numéro de publication: **0 133 703**
**B1**

(12) **FASCICULE DE BREVET EUROPEEN**

(45) Date de publication du fascicule du brevet: **18.05.88**

(51) Int. Cl.⁴: **H 04 Q 11/04**

(21) Numéro de dépôt: **84109468.3**

(22) Date de dépôt: **09.08.84**

(54) **Centre satellite numérique de raccordement d'abonnés.**

(30) Priorité: **11.08.83 FR 8313212**

(43) Date de publication de la demande:
**06.03.85 Bulletin 85/10**

(45) Mention de la délivrance du brevet:
**18.05.88 Bulletin 88/20**

(84) Etats contractants désignés:
**BE CH DE FR GB IT LI NL SE**

(56) Documents cités:
**COMMUTATION & TRANSMISSION, vol. 5, no. 3, septembre 1983, pages 139-150, Issy-les-Moulineaux, FR; R. TRUBERT et al.: "Système E 10: Le centre satellite numérique-CSN"**

**IEEE TRANSACTIONS ON COMMUNICATIONS, vol. COM-27, no. 7, juillet 1979, pages 993-1001, IEEE, New York, USA; H. SUEYOSHI et al.:**

**"System design of digital telephone switching system - NEAX 61"**

**COLLOQUE INTERNATIONAL DE COMMUTATION, 11 mai 1979, Session 22A, pages 419-426, Paris, FR; R. SCHELLER et al.:**

(73) Titulaire: **ALCATEL CIT**
**33, rue Emeriau**
**F-75015 Paris (FR)**

(72) Inventeur: **Kaczerowski, André**
**32, rue des Perderies**
**F-22220 Treguier (FR)**

(74) Mandataire: **Weinmiller, Jürgen et al**
**Lennéstrasse 9 Postfach 24**
**D-8133 Feldafing (DE)**

(56) Documents cités:
**"Un système de commutation temporel local pour la voix et les données"**

**PROCEEDINGS OF THE IEEE, vol. 66, no. 2, février 1978, pages 182-191, IEEE, New York, USA; D.K. MELVIN: "Microcomputer applications in telephony"**

**NACHRICHTENTECHNISCHE ZEITSCHRIFT N.T.Z., vol. 36, no. 4, avril 1983, pages 236-239, Berlin, DE; G. OLIVER: "System X knüpft das dienstintegrierte Datennetz Grossbritanniens" L'ONDE ELECTRIQUE, vol. 61, no. 11,**

**novembre 1981, pages 36-47, Paris, FR; B. ROCHE et al.: "Les unités de raccordement d'abonnés (URA) pour autocommutateurs temporels"**

Courier Press, Leamington Spa, England.

EP 0 133 703 B1

## Description

L'invention concerne le raccordement d'abonnés analogiques ou numériques, qu'ils soient proches du central numérique de rattachement, ou éloignés de celui-ci, et plus particulièrement un centre numérique de raccordement d'abonnés à un réseau téléphonique.

Un central numérique de rattachement nécessite, pour les abonnés analogiques, une conversion analogique/numérique (A/N) des signaux de parole; cette conversion est effectuée dans une unité de raccordement d'abonnés localisée soit au central lui-même soit au centre satellite le plus proche de l'abonné.

Le document FR—A—2 144 109, décrit une unité de raccordement qui peut être soit locale, c'est-à-dire installée au central téléphonique, soit distante, c'est-à-dire constituer alors un centre satellite relié au central par des lignes multiplex à 2 Mbit/s.

Dans les centres numériques, la concentration des abonnés se fait avant ou après la conversion A/N, et les interfaces sont toujours les mêmes, ligne d'abonnés analogiques d'un côté, liaison numérique à 2 Mbit/s de l'autre côté.

De telles unités de raccordement à interface abonné purement analogique laissent un certain nombre d'abonnés échapper aux avantages de la numérisation du réseau téléphonique; en effet les groupes d'abonnés dispersés, généralement éloignés, sont raccordés au centre par l'intermédiaire de lignes partagées, de concentrateurs analogiques, ou encore de multiplexeurs analogiques. Tous ces dispositifs sont indépendants du système de commutation et leur installation ainsi que leur maintenance sont assurées par un personnel différent de celui chargé du système de commutation.

D'autre part la tendance actuelle est d'installer des réseaux numériques avec intégration des services, qui couvrent l'ensemble des besoins de communications: téléphonie, données, images, son. L'intégration des services doit donc commencer par le réseau de distribution avec la mise en place, chez l'abonné, d'une installation terminale, ou régie, gérant un ensemble de terminaux tels que par exemple téléphone, facsimilé, équipement terminal de données, etc..., et dialoguant avec le central numérique de rattachement par une ligne numérique, à 144 kbit/s par exemple, portant simultanément la parole, les données et la signalisation, le codage étant effectué au domicile de l'abonné.

Le document N.T.Z., vol 36, N° 4, avril 1983, pages 236 à 239, décrit succinctement une unité de raccordement comportant un module de raccordement d'abonnés analogiques, un module de raccordement d'abonnés numériques et un concentrateur relié par une ligne multiplex à un central; en sortie de chaque module de raccordement, un multiplexeur permet le raccordement des abonnés au concentrateur par une ligne multiplex; l'unité de raccordement comprend également une commande reliée au concentrateur et aux modules de raccordement. Cette unité de raccordement assure le regroupement d'un petit nombre d'abonnés géographiquement proches pour les relier à un central par une ligne commune.

L'invention a pour but le raccordement d'abonnés analogiques ou numériques, locaux ou éloignés, en offrant à tous les abonnés les avantages d'un réseau numérique.

L'invention a également pour but, dans le cas d'abonnés situés dans une zone distante d'un central numérique de rattachement, de regrouper les abonnés sur une unité satellite située dans la zone et d'intégrer l'unité satellite au central, de manière que les abonnés ne présentent plus aucune particularité ni pour les services qui leurs sont offerts ni pour les processus d'exploitation et de maintenance.

Ces buts sont atteints par le centre satellite tel qu'il est défini dans la revendication 1.

L'invention va être décrite ci-après plus en détail à l'aide d'exemples de réalisation illustrés par les dessins annexés dans lesquels:

— la figure 1 représente l'architecture générale d'un centre satellite numérique de l'invention,

— la figure 2 représente un concentrateur numérique local d'abonnés analogiques, contenu dans le centre de la figure 1,

— la figure 3 représente un concentrateur numérique éloigné d'abonnés analogiques, contenu dans le centre de la figure 1,

— la figure 4 représente un concentrateur numérique local d'abonnés numériques, faisant partie du centre de la figure 1,

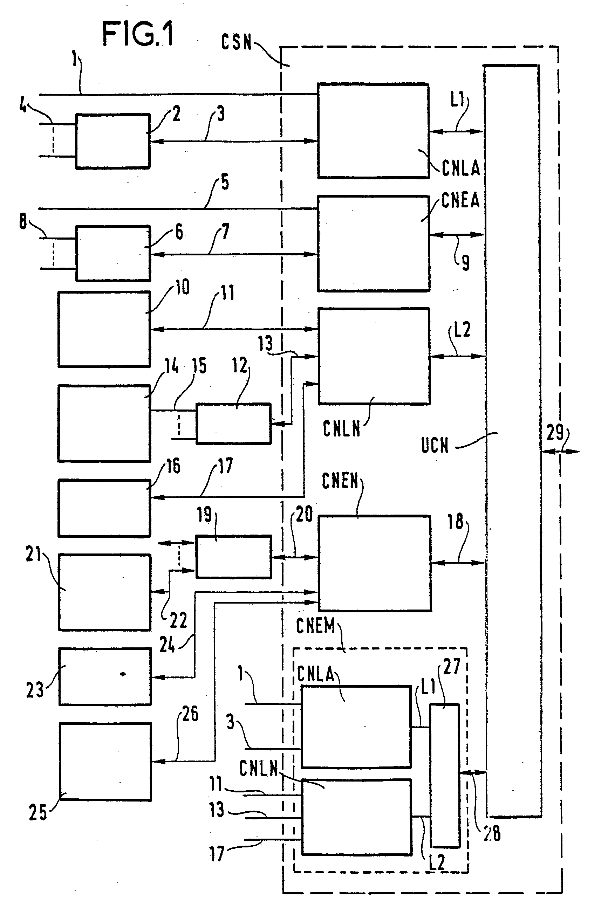

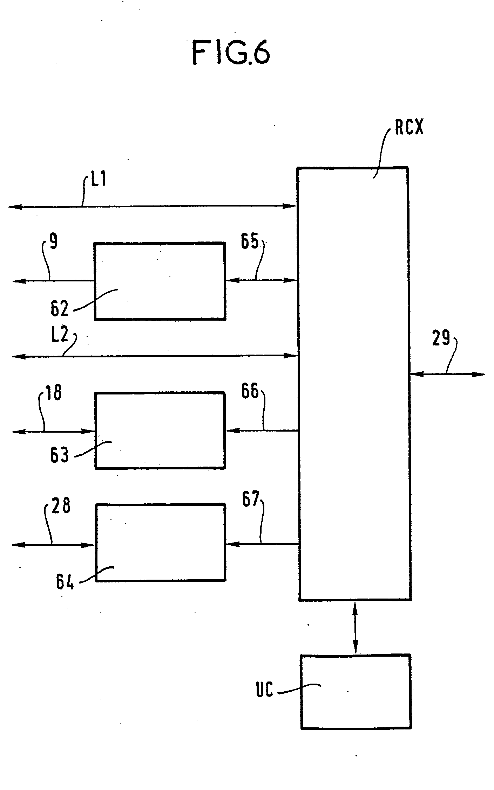

— le figure 5 représente un concentrateur numérique éloigné d'abonnés numériques, faisant partie du centre de la figure 1,

— la figure 6 représente une unité de commande numérique faisant partie du centre de la figure 1.

La figure 1 représente l'architecture générale d'un centre satellite numérique CSN de l'invention, constitué d'une unité de commande numérique UCN, de concentrateurs numériques locaux d'abonnés analogiques CNLA, de concentrateurs numériques éloignés d'abonnés analogiques CNEA, de concentrateurs numériques locaux d'abonnés numériques CNLN, de concentrateurs numériques éloignés d'abonnés numériques CNEN et de concentrateurs numériques éloignés mixtes CNEM pour abonnés analogiques et abonnés numériques. Les concentrateurs numériques locaux CNLA et CNLN sont situés à proximité immédiate de l'unite de commande numérique UCN, dans le même local que celle-ci.

Les concentrateurs numériques éloignés CNEA, CNEN et CNEM sont à des distances variables de l'unité de commande numérique UCN à laquelle ils sont reliés par des liaisons multiplex. Bien entendu un centre satellite numérique CSN peut comporter les différents types de concentrateurs numériques ou seulement certains types de concentrateurs numériques. L'unité de commande numérique UCN réalise d'une part le raccordement des concentrateurs numériques locaux et éloignés et l'accès à un central numérique de rattachement, et d'autre part la supervision de l'ensemble du centre satellite numérique.

Un concentrateur numérique local d'abonnés analogiques CNLA raccorde des abonnés analogiques par des lignes d'abonnés telles que la ligne d'abonné 1, et/ou à au moins un multiplexeur 2, chaque multiplexeur étant relié au concentrateur par une ligne multiplex 3, à 640 kbit/s ou à 704 kbit/s, dite à débit intermédiaire; un multiplexeur est relié à des lignes d'abonnés 4, le nombre de lignes d'abonnés étant de neuf pour un débit de 640 kbit/s et de dix pour un débit de 704 kbit/s. Le concentrateur numérique local CNLA est relié à l'unité de commande numérique UCN par une liaison multiplex L1 constituée de quatre lignes multiplex à 2 Mbit/s, la liaison multiplex offrant 120 voies de communication dans chaque sens.

Un concentrateur numérique éloigné d'abonnés analogiques CNEA raccorde des abonnés analogiques par des lignes d'abonnés telles que la ligne d'abonné 5, et/ou à au moins un multiplexeur 6, chaque multiplexeur étant relié au concentrateur par une ligne multiplex 7, à débit intermédiaire; un multiplexeur est relié à des lignes d'abonnés 8, le nombre de lignes d'abonnés étant de neuf pour un débit de 640 kbit/s et de dix pour un débit de 704 kbit/s. Le concentrateur numérique éloigné CNEA est relié à l'unité de commande numérique UCN par une liaison multiplex 9 constituée par une à quatre lignes multiplex à 2 Mbit/s ou à débit intermédiaire, le nombre de lignes multiplex étant fonction du nombre d'abonnés reliés au concentrateur éloigné.

Un concentrateur numérique local d'abonnés numériques CNLN est relié à des installations terminales d'abonnés 10, chaque installation terminale étant reliée au concentrateur par une ligne d'abonné numérique 11 à 144 kbit/s, et/ou à au moins un multiplexeur 12, chaque multiplexeur étant relié au concentrateur par une ligne multiplex 13 à débit intermédiaire; un multiplexeur est relié à des installations terminales d'abonnés 14, chaque installation terminale étant reliée au multiplexeur par une ligne d'abonné numérique 15 à 144 kbit/s. Le concentrateur numérique local d'abonnés numériques CNLN peut également être relié à au moins un central automatique privé multiservices 16 (PABX multiservices), chaque cental automatique privé étant relé au concentrateur par au moins une ligne multiplex 17 à 2 Mbit/s ou à débit intermédiaire, 640 ou 704 kbit/s. Le concentrateur numérique local CNLN est relié à l'unité de commande numérique UCN par une liaison multiplex L2 constituée de quatre lignes multiplex à 2 Mbit/s.

Un concentrateur numérique éloigné d'abonnés numériques CNEN est relié à l'unité de commande numérique UCN par une liaison multiplex 18 constituée par une à quatre lignes multiplex à 2 Mbit/s ou à débit intermédiaire. Le concentrateur numérique éloigné CNEN est relié à au moins un multiplexeur 19, chaque multiplexeur étant relié au concentrateur par une ligne multiplex 20 à débit intermédiaire; un multiplexeur est relié à des installations terminales d'abonnés 21, chaque installation terminale étant reliée au multiplexeur par une ligne d'abonné numérique 22 à 144 kbit/s. Le concentrateur numérique éloigné peut également être relié à au moins un central automatique privé multiservices 23 (PABX multiservices), chaque central étant relié au concentrateur par au moins une ligne multiplex 24 à 2 Mbit/s ou à débit intermédiaire. Le concentrateur numérique éloigné peut aussi être relié à des installations terminales d'abonnés 25, chaque installation terminale étant reliée par une ligne d'abonné numérique 26 à 144 kbit/s.

Un concentrateur numérique éloigné mixte CNEM est relié à l'unité de commande numérique UCN par une liaison multiplex 28 constituée par une à quatre lignes multiplex à 2 Mbit/s ou à débit intermédiaire. Le concentrateur éloigné mixte est constitué par un concentrateur numérique local d'abonnés analogiques CNLA, un concentrateur numérique local d'abonnés numériques CNLN et un circuit interface 27 relié d'une part à chacun des concentrateurs locaux et d'autre part à la liaison multiplex 28. Le concentrateur numérique local d'abonnés analogiques CNLA est raccordé à des abonnés par des lignes d'abonnés et à des multiplexeurs par des lignes multiplex, comme dans le cas du concentrateur CNLA décrit précédemment. De même le concentrateur numérique local d'abonnés numériques CNLN est relié, comme dans le cas du concentrateur CNLN décrit précédemment, à des installations terminales d'abonnés, à des multiplexeurs et à des centraux automatiques privés multiservices.

L'unité de commande numérique UCN est reliée à un central numérique de rattachement par une liaison multiplex 29 constituée par deux à seize lignes multiplex bidirectionnelles à 2 Mbit/s.

Bien évidemment chaque type de concentrateur CNLA, CNEA, CNLN et CNEN peut comporter tous les types de raccordement mentionnés ci-dessus, ou seulement certains de ces types de raccordement; il en est de même pour les concentrateurs CNLA et CNLN du concentrateur numérique éloigné mixte CNEM.

Le centre satellite numérique CSN peut être implanté au central numérique de rattachement, ou en être lui-même éloigné, afin de regrouper les abonnés situés dans une zone distante du central.

Dans le cas d'un concentrateur numérique local d'abonnés analogiques CNLA, par ligne d'abonné il faut comprendre qu'il peut s'agir d'un seul abonné ou d'un central privé relié au concentrateur par au moins une ligne d'abonné; mais vu du concentrateur local CNLA ce central privé se comporte comme un abonné.

Les lignes d'abonnés numériques à 144 kbit/s comportent, conformément aux recommandations du CCITT, deux canaux B à 64 kbit/s pour la parole et les données et un canal D à 16 kbit/s pour la signalisation, les données en mode paquet, les téléalarmes et les télémesures; l'ensemble des deux canaux B et du canal D constituent l'accès de base à un abonné, accès qui est particulièrement adapté à l'échange de la signalisation nécessaire pour le fonctionnement des terminaux de données dans les réseaux numériques avec intégration des services. Les recommandations du CCITT ont également défini un accès étendu qui comporte n canaux B à 64 kbit/s et un canal D à 64 kbit/s, n étant inférieur ou égal à 30; les signaux correspondant à un tel accès étendu sont acheminés par une ligne multiplex à débit intermédiaire ou à 2 Mbit/s.

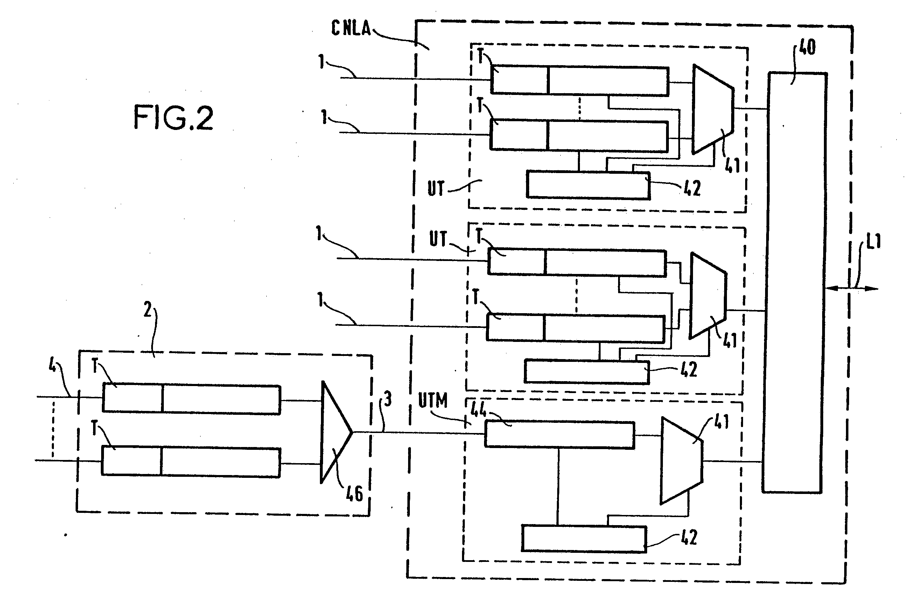

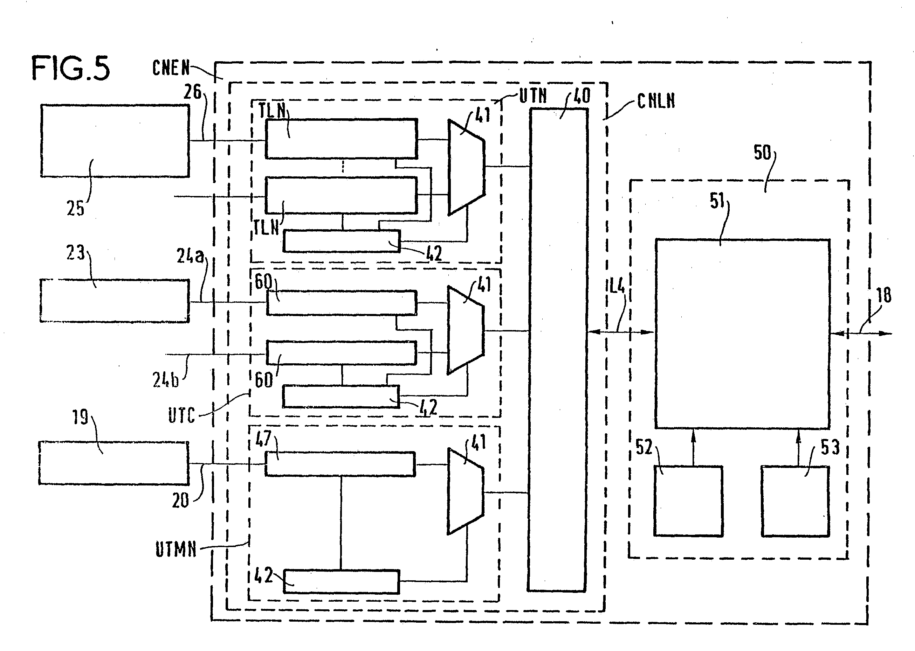

Le centre satellite numérique de la figure 1 permet donc tous les types de raccordement, et aussi relier économiquement à la fois les zones à habitat dispersé, telles que les zones rurales, et les zones où la population est regroupée en ilots, comme par exemples les immeubles d'habitation en zone urbaine. Il est en effet intéressant d'effectuer le raccordement des lignes, analogiques ou numériques, le plus près possible des abonnés pour obtenir un gain sur les câbles du réseau de distribution, ou encore pour augmenter la capacité de raccordement d'un réseau existant. Le centre satellite numérique CSN permet le raccordement d'abonnés éloignés, allant dans le cas d'abonnés analogiques, d'une dizaine d'abonnés, par l'intermédiaire d'un multiplexeur, à 256 abonnés par l'intermmédiaire d'un concentrateur numérique éloigné. Le raccordement des multiplexeurs et des concentrateurs numériques éloignés est généralement réalisé par une ou plusieurs lignes multiplex, mais il peut également être réalisé par faisceau hertzien en fonction de la situation géographique de l'organe à raccorder (multiplexeur ou concentrateur éloigné). L'utilisation d'un débit intermédiaire permet l'utilisation de câbles existants du réseau de distribution, ce qui n'entraîne pas un coût supplémentaire pour le raccordement de l'organe à raccorder (multiplexeur ou concentrateur éloigné). Le centre satellite numérique offre une grand souplesse de raccordement puisqu'il permet le raccordement de multiplexeurs soit directement sur un concentrateur local de type CNLA ou CNLN, soit par l'intermédiaire d'un concentrateur éloigné de type CNEA ou CNEN. L'emploi d'un concentrateur numérique éloigné mixte CNEM facilite le raccordement des abonnés, puisqu'il permet de raccorder dans un même lieu géographique à la fois des abonnés analogiques et des abonnés numériques. Le centre satellite numérique peut recevoir simultanément et en proportion quelconque des lignes d'abonnés analogiques ou numériques et même des centraux automatiques privés multiservices (PABX multiservices). Pour s'adapter à l'évolution du réseau de distribution, il faut faciliter l'exploitation en permettant des modifications de la configuration des éléments de raccordement de manière simple. A cet effet le déport par un multiplexeur se réalise simplement en remplaçant, dans un concentrateur local ou éloigné, une carte de raccordement d'abonnés par une carte de raccordement de multiplexeurs; le déport par un concentrateur éloigné se réalise en ajoutant à un concentrateur local et à l'entrée de l'unité de commande numérique UCN, des cartes d'interface de lignes de transmission au débit souhaité. Cette modularité dans l'équipement du centre satellite numérique permet un déport au moindre coût, avec un matériel réduit à fois en nombre et en types de cartes, ce qui entraîne un lot de maintenance minimum pour l'exploitant. Ces caractéristiques et avantages du centre satellite numérique de l'invention représenté schématiquement figure 1, sont illustrées par les figures 2 à 6.

La figure 2 représente à titre d'exemple un concentrateur numérique local d'abonnés analogiques CNLA et un multiplexeur d'abonnés analogiques 2 de la figure 1. Le concentrateur local CNLA est du type décrit dans le document FR—A—2 513 470. Le concentrateur numérique local CNLA de la figure 2 comporte un circuit interface 40, des unités de terminaux d'abonnés UT, et une unité terminale de multiplexeur UTM. Une unité de terminaux d'abonnés UT comporte un certain nombre, seize par exemple, de terminaux T d'abonnés reliés chacun à une ligne d'abonné 1, un premier étage de concentration numérique 41 et une unité de commande secondaire 42 reliée à chaque terminal et au premier étage de concentration 41. Chaque terminal d'abonné T est constitué d'un joncteur SLIC et d'un circuit de codage et de décodage et de filtrage, et assure toutes les fonctions désignées par le terme BORSCHT, ces fonctions étant l'alimentation, la protection contre les surcharges, le signal de sonnerie, la supervision, le codage/décodage et le filtrage, la conversion deux fils/quatre fils, et les tests. On trouvera une définition du terme BORSCHT dans la revue IEEE-SPECTRUM de février 1977, page 46. Chaque terminal d'abonné T est relié au premier étage de concentration numérique 41, lui-même relié au circuit interface 40. Une unité de terminale de multiplexeur UTM comporte un terminal de multiplexeur 44 qui est un circuit interface, un premier étage de concentration numérique 41 et une unité de commande secondaire 42 reliée au circuit interface 44 et au premier étage de concentration numérique 41, lui-même relié au circuit interface 40. Le circuit interface 44 est relié par une ligne multiplex 3, à un multiplexeur 2 d'abonnés analogiques qui comporte des terminaux d'abonnés T, identiques à ceux d'une unité de terminaux UT, et un circuit interface 46 assurant la liaison entre les terminaux T et le circuit interface 44 via la liaison multiplex 3; chaque terminal d'abonné T du multiplexeur 2 est relié à une ligne d'abonné 4; le circuit interface 46 assure le multiplexage et le démultiplexage des signaux en provenance, où à destination des terminaux d'abonnés. Le circuit interface 40 est relié à la liaison multiplex L1 qui relie le concentrateur numérique local CNLA à l'unité de commande numérique UCN, figure 1. Ce circuit interface 40 est un circuit d'horloge et de synchronisation dupliqué, également décrit dans le document FR—A—2 513 470 déjà cité; ce circuit élabore les signaux de synchronisation et d'horloge nécessaires aux unités de terminaux UT et UTM, et comporte des circuits de synchronisation en série avec les quatre lignes multiplex de la liaison multiplex L1. Les unités de terminaux UT et UTM sont constituées chacune par une carte; il est donc aisé de modifier la structure du concentrateur numérique local CNLA en remplaçant une carte d'une unité de terminaux d'abonnés UT par une carte d'une unité de terminale de multiplexeur UTM, et réciproquement.

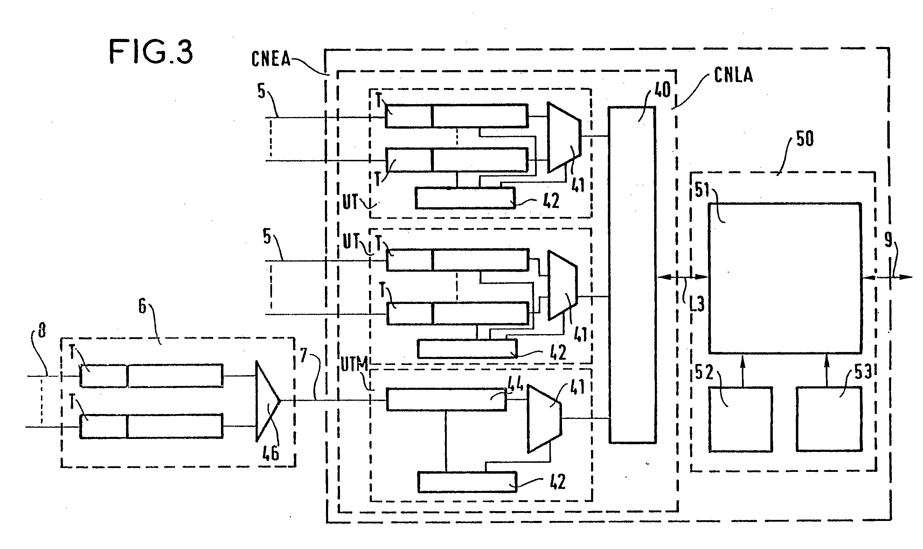

La figure 3 représente à titre d'exemple, un concentrateur numérique éloigné d'abonnés analogiques CNEA et un multiplexeur d'abonnés analogiques 6 de la figure 1. Le concentrateur numérique éloigné CNEA de la figure 3 est constitué par un concentrateur numérique local d'abonnés analogiques CNLA, identique à celui de la figure 2, et d'un circuit d'interface 50 relié par une liaison multiplex L3 au concentrateur numérique local CNLA; cette liaison multiplex L3 est identique à la liaison multiplex L1 de la figure 2, et comporte quatre lignes multiplex à 2 Mbit/s. Le circuit d'interface 50 est relié à l'unité de commande numérique UCN par la liaison multiplex 9, et comporte un circuit de transcodage et de resynchronisation 51 et un ou deux oscillateurs 52, 53 synchronisés par l'horloge récupérée sur la liaison multiplex 9; les oscillateurs servent au pilotage du concentrateur numérique éloigné CNEA, et il y a un oscillateur lorsque la liaison multiplex comporte une seule ligne multiplex, et deux oscillateurs lorsqu'elle comporte au moins deux multiplex. Il y a une carte de transcodage et de resynchronisation par ligne multiplex constituant la liaison multiplex 9, chaque ligne multiplex ayant un débit de 2 Mbit/s ou intermédiaire. Les fonctions de transcodage et de resynchronisation sont bien connues de l'homme de l'art. Dans le concentrateur numérique local CNLA chaque terminal T est relié à une ligne d'abonné 5, et l'interface 44 de l'unité terminale de multiplexeur UTM est reliée par une ligne multiplex 7, à un multiplexeur d'abonnés analogues 6, ce multiplexeur 6 étant identique au multiplexeur 2 de la figure 2 et relié à des lignes d'abonnés 8. Comme indiqué lors de la description de la figure 1, les multiplexeurs d'abonnés analogiques 6 sont reliés à neuf ou dix abonnés et comportent donc chacun neuf ou dix terminaux T, la ligne multiplex 7 étant à débit intermédiaire, 640 kbit/s pour neuf abonnés et 704 kbit/s pour dix abonnés.

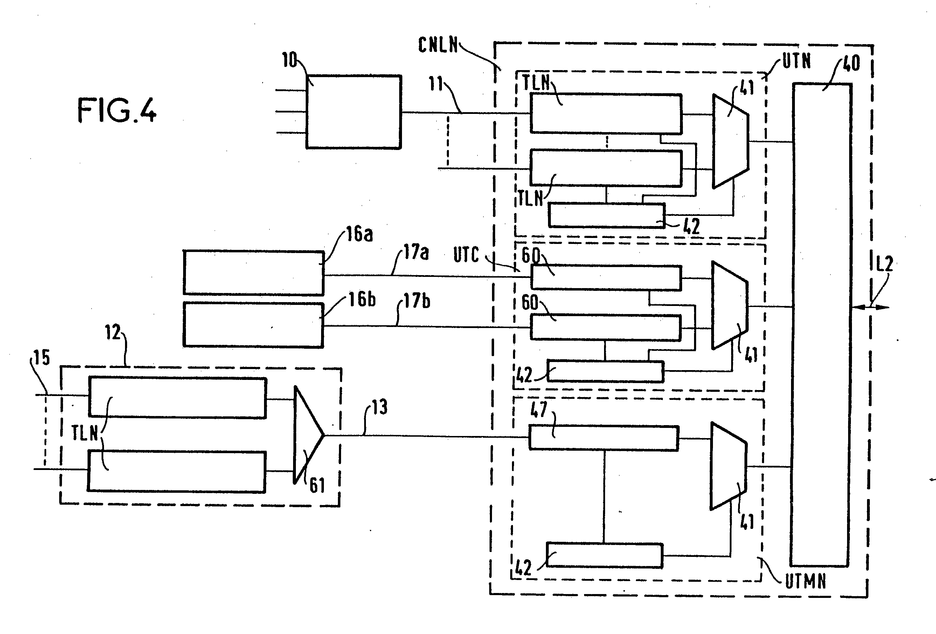

La figure 4 représente un concentrateur numérique local d'abonnés numériquea CNLN, et un multiplexeur 12 de la figure 1. Dans la figure 4, le concentrateur CNLN comporte, à titre d'exemple, une unité de terminaux numériques UTN reliée à des installations terminales d'abonnés telles que 10, une unité terminale de centraux UTC reliée à des centraux automatiques privés multiservices tels que 16a et 16b, et une unité terminale de multiplexeur numérique UTMN reliée à un multiplexeur 12 d'abonnés numériques; les unités de terminaux sont reliées à un circuit interface 40 identique à celui des concentrateurs CNLA et CNEA des figures 2 et 3.

Une unité de terminaux numériques UTN comprend des terminaux de lignes d'abonnés numériques TLN reliés à un premier étage de concentration numérique 41, et une unité de commande secondaire 42 reliée à chaque terminal TLN et au premier étage de concentration numérique 41. Chaque terminal de ligne d'abonné numérique TLN est relié par une ligne d'abonné numérique 11, à 144 kbit/s, à une installation terminale d'abonné 10, et joue le rôle d'interface pour divers systèmes de transmission à 144 kbit/s: alternat, liaison quatre fils ou systèmes à annulation d'écho; un terminal de ligne permet également l'extraction des canaux B à 64 kbit/s et du canal D à 16 kbit/s acheminant la signalisation et les données en mode paquet.

Une unité de terminaux de centraux UTC comprend par exemple deux circuits interface 60 reliés à un premier étage de concentration numérique 41 et une unité de commande secondaire 42 reliée à chaque circuit interface et un premier étage de concentration numérique 41; chaque circuit interface 60 est relié à un central automatique privé multiservices, 16a, 16b par une ligne multiplex 17a, 17b respectivement.

Une unité terminale de multiplexeur numérique UTMN comporte un circuit interface 47, un premier étage de concentration 41 et une unité de commande secondaire 42 reliée au circuit interface 47 et au premier étage de concentration 41; l'interface 47 est relié par une ligne multiplex 13, à un multiplexeur 12 d'abonnés numériques qui comporte des terminaux de lignes d'abonnés numériques TLN, identiques à ceux d'une unité de terminaux numériques UTN, reliés à un circuit interface 61 assurant le multiplexage et le démultiplexage des signaux à destination ou en provenance de l'unité terminale de multiplexeur numérique UTMN par la ligne multiplex 13. Chaque terminal de ligne d'abonné numérique TLN est relié par une ligne d'abonné numérique 15 à une installation terminale d'abonné. Le premier étage de concentration numérique 41 de chacune des unités de terminaux UTN, UTC, UTM, est relié au circuit interface 40 lui-même relié par la liaison multiplex L2 à l'unité de commande numérique UCN.

Le premier étage de concentration numérique 41 et l'unité de commande secondaire 42 sont identiques à ceux des figures 2 et 3, et un concentrateur numérique local d'abonnés numériques CNLN peut bien entendu comporter une ou plusieurs des unités de terminaux UTN, UTC et UTMN représentées figure 4, ou seulement certaines de ces unités terminales.

La figure 5 représente un concentrateur numérique éloigné d'abonnés numériques CNEN de la figure 1, comportant un concentrateur numérique local d'abonnés numériques CNLN, identique à celui de la figure 4, et un circuit interface 50 identique à celui de la figure 3. Chaque terminal de ligne d'abonné numérique TLN de l'unité de terminaux numériques UTN est relié par une ligne d'abonné numérique 26 à une installation terminale d'abonné 25. Chaque circuit interface 60 de l'unité de terminaux de centraux UTC est relié par une ligne multiplex 24a, 24b, à un central automatique privé multiservices 23. Le circuit interface 47 de l'unité terminale de multiplexeur numérique UTMN est relié par une ligne multiplex 20, à un multiplexeur 19 d'abonnés numériques, identique au multiplexeur 12 de la figure 4. Le concentrateur numérique local d'abonnés numériques CNLN est relié par une liaison multiplex L4, à 2 Mbit/s, identique à la liaison multiplex L2 de la figure 4. Le circuit d'interface 50 est relié par la liaison au multiplex 18 à l'unité de commande UCN de la figure 1, cette liaison étant constituée par une à quatre lignes multiplex à 2 Mbit/s ou à débit intermédiaire.

Il a été indiqué, lors de la description de la figure 1, que le concentrateur numérique éloigné mixte CNEM comportait un concentrateur numérique local d'abonnés analogiques CNLA et un concentrateur numérique local d'abonnés numériques CNLN; ces concentrateurs sont donc identiques à ceux décrits et représentés figures 2 et 4, le circuit interface 27 étant par ailleurs identique au circuit interface 50 des figures 3 et 5.

La figure 6 représente schématiquement l'unité de commande numérique UCN de la figure 1, qui comporte un réseau de connexion temporel RCX, une unité de commande primaire UC et des circuits d'interface de concentrateurs numériques 62, 63, 64. Ces circuits interfaces sont d'un premier type lorsque les liaisons multiplex 9, 18, 28 qui les relient à un concentrateur éloigné sont à 2 Mbit/s, et d'un second type lorsque ces liaisons multiplex ont un débit intermédiaire; elles sont donc identiques, et conséquent interchangeables, si les liaisons multiplex 9, 18, 28 ou certaines d'entre elles ont le même débit.

Le concentrateur numérique éloigné d'abonnés analogiques CNEA est relié par la liaison multiplex 9 au circuit d'interface 62 lui-même relié au réseau de connexion RCX par une liaison multiplex à 2 Mbit/s. Le concentrateur numérique éloigné d'abonnés numériques CNEN est relié par la liaison multiplex 18 au circuit d'interface 63 lui-même relié au réseau de connexion temporel RCX par une liaison multiplex 66 à 2 Mbit/s. Le concentrateur numérique éloigné mixte CNEM est relié par la liaison multiplex 28 au circuit d'interface 64 lui-même relié au réseau de connexion temporel RCX par une liaison multiplex 67 à 2 Mbit/s. Le concentrateur numérique local d'abonnés analogiques CNLA et le concentrateur numérique local d'abonnés numériques CNLN sont reliés directement au réseau de connexion temporel RCX par les liaisons multiplex L1 et L2, respectivement; ces liaisons multiplex sont à 2 Mbit/s. Le réseau de connexion temporel est relié à un module de raccordement de liaisons multiplex du central numérique de rattachement par la liaison multiplex 29, à 2 Mbit/s, cette liaison multiplex étant constituée de deux à seize lignes multiplex bidirectionnelles à 2 Mbit/s chacune. Le réseau de connexion temporel RCX constitue le deuxième étage de concentration du centre satellite numérique CSN de l'invention et permet donc de relier, dans les deux sens, les abonnés analogiques et les abonnés numériques au central numérique de rattachement. Le réseau de connexion temporel RCX est commandé par l'unité de commande primaire UC qui est reliée au réseau de connexion. Cette unité de commande primaire assure le dialogue avec le central numérique de rattachement en utilisant le système de signalisation sur voie commune n° 7 du CCITT, et le dialogue avec les concentrateurs numériques en procédure sémaphore en utilisant pour cela un intervalle de temps des trames des liaisons multiplex L1, L2, 65, 66, 67, par exemple l'intervalle de temps IT6, les trames étant divisées en 32 intervalles de temps.

Comme cela a été dit précédemment, le centre satellite numérique peut comporter différents types de concentrateurs numériques, locaux, éloignés ou mixtes. Le réseau de connexion temporel RCX permet de raccorder le centre satellite numérique au central de rattachement par 16 lignes multiplex à 2 Mbit/s, qui constituent la liaison multiplex 29; côté abonnés le réseau de connexion peut être relié à des concentrateurs numériques jusqu'à concurence de 42 lignes multiplex à 2 Mbit/s, ce qui permet, par l'intermédiaire des concentrateurs numériques de relier 2048 abonnés dispersés sur une vingtaine de sites différents grâce aux concentrateurs numériques éloignés eux mêmes prolongés par les multiplexeurs. Le centre satellite numérique de l'invention est donc parfaitement adapté à l'équipement de zones à forte densité téléphonique comme les zones urbaines et industrielles ou à densité téléphonique faible, telles que par exemple les zones rurales à habitat dispersé. Le centre satellite numérique peut également assurer jusqu'à 120 communications locales qui n'ont donc pas besoin de transiter par le central numérique de rattachement; cette possibilité d'établir des communications locales constitue un avantage non négligeable pour la constitution du réseau téléphonique;

Par ailleurs la possibilité de pouvoir équiper un concentrateur numérique d'un type donné, de cartes d'unites de terminaux d'abonnés, de cartes de terminaux de centraux ou de cartes de terminaux de multiplexeurs donne une grande souplesse de raccordement qui complète la possibilité d'utiliser n'importe quel type de concentrateur numérique.

**Revendications**

1. Centre satellite numérique (CSN) de raccordement d'abonnés analogiques et d'abonnés numériques, pour le raccordement d'abonnés locaux et d'abonnés éloignés, caractérisé par le fait qu'il comporte une unité de commande numérique (UCN) et des concentrateurs numériques d'abonnés d'au moins un des types suivants, à savoir type local pour abonnés analogiques (CLNA), de type éloigné pour abonnés analogiques (CNEA), de type local pour abonnés numériques (CNLN), de type éloigné pour abonnés numériques (CNEN) et de type éloigné mixte (CNEM) pour abonnés analogiques et abonnés numériques, chaque concentrateur comportant des unités de terminaux et étant relié à l'unité de commande numérique (UCN) par une liaison multiplex (L1, L2, 9, 18, 28), l'unité de commande numérique (UCN) comportant un réseau de connexion (RCX) relié auxdites liaisons multiplex et une unité de commande (UC) et assurant une concentration desdites liaisons multiplex, ledit réseau de connexion (RCX) étant relié à un central numérique de rattachement par une liaison multiplex (29).

2. Centre satellite numérique selon la revendication 1, caractérisé par le fait qu'un concentrateur numérique d'abonnés analogiques de type local (CNLA) ou éloigné (CNEA) comporte des unités de terminaux d'abonnés (UT) et des unités terminales de multiplexeur (UTM), une unité terminale de multiplexeur comportant un circuit interface (44), relié par une ligne multiplex (3) à un multiplexeur (2) comportant lui-même des terminaux d'abonnés (T) reliés chacun à une ligne d'abonné (4).

3. Centre satellite numérique selon l'une des revendications 1 et 2, caractérisé par le fait qu'un concentrateur numérique d'abonnés numériques de type local (CNLN) ou éloigné (CNEN) comporte des unités de terminaux numériques (UTN), des unités de terminaux de centraux (UTC) et des unités terminales de multiplexeur numérique (UTMN), une unité de terminaux numérique (UTN) comportant des terminaux de ligne d'abonnés numériques (TLN), chaque terminal de ligne d'abonné numérique étant relié par une ligne numérique (11, 26) à une installation terminale d'abonné (10, 25) située chez l'abonné, une unité de terminaux de centraux (UTC) comportant des circuits interfaces (60), chaque circuit interface étant relié par une ligne multiplex (17a, 24a) à un central automatique privé multiservices (16, 23), une unité terminale de multiplexeur numérique (UTMN) comportant des circuits interfaces (47), chaque circuit interface (47) étant relié par une ligne multiplex (13, 20) à un multiplexeur (12, 19) comportant lui-même des terminaux de lignes d'abonnés numériques (TLN) reliés par des lignes numériques (15, 22) à des installations terminales d'abonnés (14, 21).

4. Centre satellite numérique selon l'une des revendications 1 à 3, caractérisé par le fait qu'un concentrateur numérique éloigné mixte (CNEM) comprend un concentrateur numérique local d'abonnés analogiques (CNLA), un concentrateur numérique local d'abonnés numériques (CNLN) et un circuit interface (27) relié à chaque concentrateur local et à l'unité de commande numérique (UCN), le concentrateur numérique local d'abonnés analogiques (CNLA) comportant des unités de terminaux d'abonnés (UT) et des unités terminales de multiplexeur (UTM), le concentrateur numérique local d'abonnés numériques (CNLN) comportant des unités de terminaux numériques (UTN), des unités de terminaux de centraux (UTC) et des unités terminales de multiplexeur numérique (UTMN).

**Patentansprüche**

1. Digitale Ortsvermittlungszentrale (CSN) für Analog- und Digitalteilnehmer, zum Anschluß von Orts- und Fernteilnehmern, dadurch gekennzeichnet, daß sie eine digitale Steuereinheit (UCN) und digitale Teilnehmerkonzentratoren von mindestens einem der folgenden Typen aufweist: Ortsanschluß für Analogteilnehmer (CLNA), Fernanschluß für Analogteilnehmer (CNEA), Ortsanschluß für Digitalteilnehmer (CNLN), Fernanschluß für Digitalteilnehmer (CNEN) und Mischfernanschluß für Analog- und Digitalteilnehmer (CNEM), wobei jeder Konzentrator Endgeräte besitzt und über eine Multiplexverbindung (L1, L2, 9, 18, 28) an eine digitale Steuereinheit (UCN) angeschlossen ist, und die Steuereinheit (UCN) ein Vermittlungsnetz (RCX), welches an die genannten Multiplexverbindungen angeschlossen ist, sowie eine Steuereinheit (UC) aufweist, und eine Konzentrierung der genannten Multiplexverbindungen sicherstellt, und daß das Vermittlungsnetz (RCX) über eine Multiplexverbindung (29) an eine digitale Anschlußzentrale angeschlossen ist.

2. Digitale Ortsvermittlungszentrale nach Anspruch 1, dadurch gekennzeichnet, daß ein digitaler Konzentrator für Analogteilnehmer im Ortsanschluß (CNLA) oder im Fernanschluß (CNEA) Teilnehmerendgeräte (UT) und Multiplexerendeinheiten (UTM) aufweist, wobei eine Multiplexerendeinheit einen Interfacekreis (44) besitzt, der über eine Multiplexleitung (3) an einen Multiplexer (23) angeschlossen ist, der seinerseits Teilnehmerendgeräte (T) besitzt, die jedes an eine Teilnehmerleitung (4) angeschlossen sind.

3. Digitale Ortsvermittlungszentrale nach einem der Ansprüche 1 und 2, dadurch gekennzeichnet, daß ein digitaler Konzentrator für Digitalteilnehmer im Ortsanschluß (CNLN) oder im Fernanschluß (CNEN) digitale Endgeräte (UTN), Zentralendgeräte (UTC) und Endeinheiten der digitalen Multiplexer (UTMN) aufweist, wobei ein digitales Endgerät (UTN) Leitungsendgeräte (TLN) von Digitalteilnehmern besitzt, die über eine Digitalleitung (11, 26) an eine Teilnehmerendanlage (10, 25) beim Teilnehmer angeschlossen sind, daß eine Einheit der Zentralendgeräte (UTC) Schnittstellenkreise (60) besitzt, die über eine Multiplexleitung (17a, 24a) an eine private automatische Multiservicezentrale (16, 23) angeschlossen sind, und daß eine digitale Multiplexerendeinheit (UTMN) Schnittstellenkreise (47) umfaßt, die über eine Multiplexleitung (13, 20) an einem Multiplexer (12, 19) angeschlossen sind, der seinerseits Leitungsendgeräte von Digitalteilnehmern (TLN) besitzt, welche über Digitalleitung (15, 22) an Teilnehmerendanlagen (14, 21) angeschlossen sind.

4. Digitale Ortsvermittlungszentrale nach einem der Ansprüche 1 bis 3, dadurch gekennzeichnet, daß ein digitaler Mischfernanschlußkonzentrator (CNEM) einen digitalen Ortsanschlußkonzentrator für Analogteilnehmer (CNLA), einen digitalen Ortsanschlußkonzentrator für Digitalteilnehmer (CNLN) und einen Schnittstellenkreis (27) umfaßt, der an jeden der Ortsanschlußkonzentratoren sowie an die digitale Steuereinheit (UCN) angeschlossen ist, wobei der digitale Ortsanschlußkonzentrator für Analogteilnehmer (CNLA) Teilnehmerendgeräte (UT) und Multiplexerendeinheiten (UTM) besitzt, während der digitale Ortsanschlußkonzentrator für Digitalteilnehmer (CNLN) Zentralendgeräte (UTC) und Endeinheiten der digitalen Multiplexer (UTMN) besitzt.

## Claims

1. A digital satellite exchange (CSN) for connecting analog and digital subscribers, local and remote subscribers, characterized in that it comprises a digital control unit (UCN) and digital subscriber concentrators of at least one of the following types: local for analog subscribers (CLNA), remote for analog subscribers (CNEA), local for digital subscribers (CNLN), remote for digital subscribers (CNEN), and remote mixed (CNEM) for analog digital subscribers, each concentrator comprising terminal units and being connected to a digital control unit (UCN) by intermediary of a multiplex link (L1, L2, 9, 18, 28), wherein the digital control unit (UCN) comprises a switching network (RCX) connected with said multiplex links and a control unit (UC) and ensures the concentration of the multiplex links, the switching network (RCX) being connected to a local access digital exchange by intermediary of a multiplex link (29).

2. A digital satellite exchange according to claim 1, characterized in that a digital concentrator of a type local (CNLA) or remote (CNEA) for analog subscribers comprises subscriber terminal units (UT) and multiplexer terminal units, wherein a multiplexer terminal unit comprises an interface circuit (44), connected by intermediary of a multiplex line (3) to a multiplexer, the latter comprising subscriber terminals (T) each connected to a subscriber line (4).

3. A digital satellite exchange according to claims 1 and 2, characterized in that a digital concentrator of a type local (CNLN) or remote (CNEN) for digital subscribers comprises digital terminal units (UTN), exchange terminal units (UTC) and digital multiplexer terminal units (UTMN), wherein a digital terminal unit (UTN) comprises digital subscriber line terminals (TLN), each of them being connected by intermediary of a digital line (11, 26) to a subscriber terminal installation (10, 25) on the subscriber's premises, an exchange terminal unit (UTC) comprising interface circuits (60), each of them being connected by intermediary of multiplex lines (17a, 24a) to a multiservice private automatic exchange, and that a digital multiplexer terminal unit (UTMN) comprises interface circuits (47), each interface circuit (47) being connected by intermediary of a multiplex line (13, 20) to a multiplexer (12, 19) comprising digital subscriber line terminals (TLN), linked by digital lines (15, 22) to subscriber terminal installations (14, 21).

4. A digital satellite exchange according to one of the claims 1 to 3, characterized in that a remote mixed digital concentrator (CNEM) comprises a local digital concentrator for analog subscribers (CNLA), a local digital concentrator for digital subscribers (CNLN) and an interface circuit (27) connected to each local concentrator and to a digital control unit (UCN), wherein the local digital concentrator for analog subscribers (CNLA) comprises subscriber terminal units (UT) and multiplexer terminal units (UTM), and the local digital concentrator for digital subscribers (CNLN) comprises digital terminal units (UTN), exchange terminal units (UTC) and digital multiplexer terminal units (UTMN).

FIG.1

FIG.2

FIG.5

0 133 703

FIG.3

FIG.4

# FIG.6